# FASCICULE DE BREVET EUROPEEN

(11) **EP 1 493 862 B1**
(45) Date de publication et mention de la délivrance du brevet: **19.06.2013**
(21) Numéro de dépôt: 04291650.2
(22) Date de dépôt: 30.06.2004
(51) Int. Cl.: D06N 3/14, D06N 3/00, D06M 15/564, C08G 18/66

(54) **Procédé d'enduction d'un substrat par un fluide à seuil d'écoulement sans solvant**
Verfahren zum Beschichten eines Substrats mit einem lösungsmittelfreien Fluid
Process for coating a substrate with a solvent-free flow threshold fluid

(30) Priorité: 01.07.2003 FR 0307971
(43) Date de publication de la demande: 05.01.2005
(73) Titulaire: BOSTIK SA, 92400 Courbevoie (FR)
(72) Inventeur: Miskovic, Michel, 60200 Compiegne (FR); Chartrel, Jean Francois, 60400 Cuts (FR)
(74) Mandataire: August & Debouzy avocats

(56) Documents cités:
- US-A- 3 891 785
- US-A- 5 935 637

## Description

L'invention a pour objet un nouveau procédé d'enduction d'un substrat par un fluide à seuil d'écoulement sans solvant, notamment par un fluide comprenant un mélange réactif polyuréthanne.

On appelle « enduction » l'application d'une substance fluide ou fluidifiée sur un support ou substrat et, par extension, la couche de la substance déposée comme enduit elle-même.

Des adhésifs sont fréquemment utilisés pour l'enduction de substrats tels que les textiles tissés ou tricotés utilisés dans la fabrication de textiles auto-agrippants. L'enduction renforce les propriétés mécaniques de ces textiles tissés ou tricotés, ce qui permet ensuite de les travailler. Après enduction, il est possible de découper longitudinalement et de massicoter ces textiles (par exemple en pastilles) selon une forme désirée, sans les déformer ou les défibrer.

Les textiles tissés ou tricotés peuvent présenter des fils simples ou des torons de filaments de fibres naturelles et/ou synthétiques (par exemple, le coton, le polypropylène, le polyamide et le polyester).

Des adhésifs couramment utilisés pour l'enduction de substrats sont les réactifs polyuréthannes bi-composants (PU2K) dans un solvant. Le solvant utilisé est généralement du type acétone, butanone ou acétate d'éthyle et permet d'ajuster la fluidité de l'adhésif. De tels mélanges sont utilisés dans des encolleuses à rouleaux à débordement ou recyclage. Il est alors nécessaire de trouver un compromis entre un adhésif suffisamment fluide pour mouiller le textile mais aussi suffisamment visqueux pour ne pas le traverser. Obtenir un mouillage correct du substrat est particulièrement difficile lorsque celui-ci présente de forts reliefs comme dans le cas des textiles gaufrés. Augmenter la fluidité du fluide fait encourir le risque de permettre au mélange de traverser le textile, ce qui nuit à ses propriétés. Typiquement, la quantité d'adhésif déposée varie entre 100 et 240 mL/m² et le grammage obtenu varie entre 15 à 40 g/m2, suivant les substrats.

Le procédé d'enduction par un mélange en solvant nécessite en outre un passage du substrat dans un tunnel de séchage ventilé. A la sortie du tunnel, le substrat enduit ne doit pas (ou très peu) présenter de collant résiduel afin de permettre sa mise en bobine. Or, le passage en tunnel limite la vitesse de la ligne de production (un ordre de grandeur étant 10 m/min) et donc, la cadence de production des ateliers. De plus, la réticulation complète de l'adhésif déposé par enduction n'est obtenue qu'après environ une semaine, ce qui amène à son tour des contraintes logistiques au niveau du stockage.

En outre, l'utilisation de colles et adhésifs mis en solvant pose des problèmes d'inflammabilité, d'exposition et de rejets atmosphériques. En particulier, l'évaporation de solvant résiduel lors du stockage du substrat enduit impose un lot de contraintes de sécurité qui se traduit par un surcoût du produit fini. De plus, les solvants provoquent l'émission de composés organiques volatils.

Une alternative aux mélanges réactifs polyuréthannes bi-composants (PU2K) en solvant est donnée par l'utilisation de dispersions aqueuses comme, par exemple, les polyuréthannes en dispersions (PUD). Malheureusement, ces dispersions aqueuses sont très pénalisantes en terme de procédé. L'évaporation de l'eau nécessite beaucoup d'énergie, réduit drastiquement les cadences de production (la vitesse du substrat est typiquement divisée par trois) et nécessite le plus souvent de grandes longueurs du tunnel de séchage (c'est-à-dire généralement 30% de longueur en plus par rapport aux longueurs nécessaires avec les mélanges polyuréthannes en solvant).

Le document US-A-3891785 a trait à un procédé d'enduction d'un substrat par un fluide à base d'un mélange réactif polyuréthanne sans solvant et ayant des propriétés pseudo plastiques.

Les procédés utilisant des mélanges en solvant ne sont donc pas satisfaisants, soit en terme de coût en énergie, soit pour des raisons de maîtrise de la fluidité du mélange.

Une alternative aux mélanges en solvant est donnée par les adhésifs HMPUR (de l'anglais « Reactive Hot-Melt Polyurethanes ») sans solvant, lesquels comprennent généralement des pré-polymères d'isocyanates. En particulier, on connaît parmi les adhésifs HMPUR, des adhésifs polyuréthannes mono composants. Les adhésifs HMPUR sont généralement solides à température ambiante, thermofusibles et leur température d'application s'étend généralement entre 85°C à 140°C. Leur viscosité au moment de l'application peut être ajustée dans une plage allant généralement de 5000 à 600000 mPas selon les conditions spécifiques. Cependant, ces adhésifs ne mouillent pas suffisamment les substrats aux températures d'application maximales imposées par certains types de substrats tels que des substrats textiles. En outre, l'ajustement simultané de la viscosité des adhésifs HMPUR et de leur montée en cohésion est difficile. De plus, l'utilisation de tels adhésifs donne lieu à un collant résiduel sur la surface d'enduction des substrats.

Il existe donc un besoin pour un procédé d'enduction d'un substrat par un fluide sans solvant, notamment un fluide comprenant un polyuréthanne, qui offre un mouillage satisfaisant du substrat.

L'invention a pour objet un procédé d'enduction d'un substrat par un fluide selon la revendication 1.

Dans des modes de réalisation préférés, l'invention comprend également une ou plusieurs des caractéristiques suivantes :
- le mélange réactif fourni comprend des caractéristiques de : viscosité Brookfield à 23°C comprise entre 100 et 200000 mPas, de préférence entre 200 et 4000 mPas, de seuil d'écoulement compris entre 1 et 5000 Pa, de préférence entre 10 et 500 Pa, et de délai d'obtention du seuil d'écoulement compris entre 1 et 20 secondes et de préférence entre 2 et 10 secondes ;
- la viscosité du fluide diminue lorsqu'une contrainte de cisaillement est appliquée sur le fluide ;
- le cisaillement de l'étape (ii) est obtenu par la mise en mouvement relatif du substrat par rapport au fluide ;
- le procédé comprend en outre une étape (iii) d'extension du substrat au moins partiellement concomitante avec l'étape de cisaillement du fluide ;
- le substrat fourni à l'étape (i) est un substrat maillé et l'étape (iii) est une étape d'extension des mailles du substrat ;
- le procédé comprend en outre une étape (iv) de chauffage du substrat ;
- le mélange réactif fourni comprend au moins une polyamine aromatique ;
- le mélange réactif fourni comprend au moins un polyether polyol, de masse moléculaire comprise entre 200 et 9000 et de fonctionnalité hydroxyle comprise entre 2,0 et 4,6 ;
- le mélange réactif fourni présente un rapport NCO / OH compris entre 1 et 2, et de préférence compris entre 1,1 et 1,4 ;
- le mélange réactif fourni comprend un catalyseur ;

L'invention concerne également un substrat enduit susceptible d'être obtenu par le procédé d'enduction d'un substrat selon l'invention. Selon un mode de réalisation préféré, le substrat comprend un textile auto-agrippant.

D'autres caractéristiques et avantages de l'invention apparaîtront à la lecture de la description qui suit de modes de réalisation préférés de l'invention, donnée à titre d'exemple.

L'invention propose un procédé d'enduction d'un substrat par un fluide à seuil d'écoulement sans solvant, comprenant les étapes : de fourniture d'un substrat et d'un fluide à seuil d'écoulement sans solvant ; de cisaillement du fluide et application du fluide sur le substrat, dans lequel le fluide fourni comprend un mélange réactif polyuréthanne sans solvant.

Le procédé selon l'invention propose donc d'exercer une contrainte de cisaillement sur un fluide à seuil d'écoulement sans solvant et d'appliquer le fluide sur un substrat. La contrainte de cisaillement exercé sur le fluide doit être suffisante pour surmonter le seuil d'écoulement de ce fluide, qui peut dès lors s'écouler. Lorsque ce seuil est franchi, le fluide peut mouiller correctement le substrat. Lorsque la contrainte de cisaillement redevient inférieure au seuil d'écoulement (par exemple lorsqu'elle cesse), le fluide ne s'écoule plus.

Il est donc possible de réaliser une enduction d'un substrat, qui mouille correctement ce substrat sans pour autant le traverser et ce, en ajustant la contrainte de cisaillement, son moment et celui de l'application du fluide.

On entend par « fluide sans solvant » un fluide comprenant moins de 2%, de préférence moins de 1%, et avantageusement moins de 500 ppm d'un solvant organique, par exemple du type acétone, butanone ou acétate d'éthyle, du poids total du fluide.

La mise en oeuvre d'un tel procédé d'enduction d'un substrat tel qu'un textile tissé ou tricoté permet donc :
- l'obtention d'une fluidité suffisante pour le mouillage puis l'enduction d'un substrat, notamment à température ambiante ;
- d'augmenter la vitesse d'une ligne de production de substrat enduit en regard des procédés utilisant un fluide avec solvant, lesquels nécessitent une étape de séchage contraignante du fluide enduit ;
- de manipuler un mélange sans solvant (et ainsi de diminuer les risques d'inflammabilité et satisfaire aux contraintes réglementaires).

Il convient de noter qu'un tel procédé peut être mis en oeuvre à travers divers dispositifs, par exemple, des dispositifs d'enduction à rouleaux (tels que des encolleuses) ou de buses à lèvres. Dans chacun des deux cas, l'étape de cisaillement du fluide peut en outre être partiellement ou totalement concomitante avec l'étape d'application du fluide. L'application du fluide sur le substrat peut alors débuter avant ou après l'étape de cisaillement : la chronologie du début des étapes de cisaillement et d'application du fluide peut donc être inversée, sans sortir du cadre de l'invention. Par ailleurs, il est important de souligner que le procédé selon l'invention peut être très simplement mis en oeuvre. Par exemple, l'utilisation d'une simple raclette ou spatule permet d'exercer une contrainte de cisaillement suffisante pour surmonter le seuil d'écoulement du fluide et permet de l'appliquer sur un substrat, de sorte à obtenir les effets mentionnés ci-dessus.

Le mélange réactif polyuréthanne sans solvant selon l'invention peut être caractérisé par ses propriétés physiques. En particulier, un mélange réactif polyuréthanne sans solvant adapté pour l'enduction d'un substrat peut présenter les caractéristiques suivantes :
- une viscosité mesurée par un viscosimètre Brookfield standard à 23°C comprise entre 100 et 200000 mPas, de préférence entre 200 et 4000 mPas ; et
- un seuil d'écoulement compris entre 1 et 5000 Pa, de préférence entre 10 et 500 Pa ; et
- un délai d'obtention du seuil d'écoulement compris entre 1 et 20 secondes et de préférence entre 2 et 10 secondes.

Un tel profil physique permet en outre un pompage facile du mélange.

Le fluide fourni peut en outre avantageusement présenter des propriétés similaires à celles de fluides rhéofluidifiants, plastiques, pseudoplastiques ou thixotropes. Plus précisément, le fluide fourni peut avantageusement présenter une viscosité qui diminue lorsqu'une contrainte leur est appliquée et qui, le cas échéant, augmente lorsque la contrainte cesse ou diminue..

Lorsqu'un tel fluide est cisaillé, sa viscosité diminue, le rendant ainsi plus apte à mouiller le substrat. Après cisaillement, le fluide retrouve au moins partiellement sa viscosité initiale, voire atteint une viscosité supérieure à celle de départ lorsque, par exemple, celui-ci est l'objet d'une réaction chimique telle qu'une polymérisation ou réticulation. Néanmoins, le fluide peut conserver un comportement newtonien, une fois le seuil d'écoulement franchi.

Ainsi, le cisaillement d'un tel fluide entraîne non seulement un mouillage correct de la surface du substrat mais de surcroît, le fluide reprend de la cohésion (immédiatement, le cas échéant) après que le cisaillement a diminué ou cessé. Fournir un tel fluide permet donc une bonne pénétration dans la trame du substrat (mouillage) sans pour autant la traverser, ainsi qu'un contrôle amélioré de l'état (visqueux ou liquide) du fluide.

Le cisaillement du fluide peut être obtenu par la mise en mouvement relatif du substrat par rapport au fluide. C'est par exemple le cas lorsque le substrat se présente sous la forme d'une bande en mouvement, contre laquelle est appliqué le fluide. Dans cet exemple, le mouvement de la bande de substrat entraîne un cisaillement du fluide : les étapes de cisaillement et d'application sont au moins partiellement concomitantes.

La vitesse relative du substrat par rapport au fluide peut en outre être ajustée (entre 1 et 200 m/min, de préférence entre 10 et 50 m/min) conjointement avec les propriétés physico-chimiques du fluide afin de permettre un contrôle précis du grammage déposé, par exemple compris entre 10 à 240 g/m2, selon le relief du substrat. Un tel ajustement permet en outre d'obtenir des propriétés variées du substrat, en particulier lorsque celui-ci se présente sous la forme d'un textile tissé ou tricoté et selon l'application envisagée. On peut citer parmi ces applications : la fixation du tissage par enduction, le rasage des bouclettes du substrat, la découpe longitudinale ou transversale au massicot, l'aboutage par soudure thermique ou ultrasons et les lisières. Un tel procédé d'enduction, selon l'invention, est en outre particulièrement bien adapté à l'enduction de textiles auto-agrippants et permet par ailleurs d'obtenir une enduction plus tendue et plus brillante qu'avec des procédés de l'art antérieur.

Le procédé d'enduction selon l'invention peut en outre comprendre une étape d'extension du substrat au moins partiellement concomitante avec l'étape de cisaillement du fluide. L'extension du substrat conduit à une ouverture du relief du substrat. Il peut s'agir d'une ouverture du réseau filamenteux (substrats tissé ou tricoté) ou bien des mailles du substrat, le cas échéant. Ceci améliore le mouillage des fibres du substrat. L'étape d'extension du substrat peut en outre être pleinement concomitante avec l'étape de cisaillement du fluide.

Lorsque le substrat fourni est un substrat maillé, l'extension en question concerne plus spécifiquement celles des mailles du substrat.

Pour un meilleur résultat, le procédé d'enduction selon l'invention peut en outre comprendre une étape de chauffage du substrat, par exemple à l'intérieur d'un four. Lorsqu'elle est réalisée après l'application du fluide sur le substrat, l'étape de chauffage augmente tout d'abord à la fluidité du mélange, ce qui parfait l'imprégnation du substrat, puis peut conduire, le cas échéant, à une réticulation (soit une montée en cohésion) du fluide. L'étape de chauffage permet ainsi non seulement d'améliorer les propriétés mécaniques du substrat enduit mais également d'améliorer substantiellement l'aspect visuel de l'enduction.

Il est également possible d'adjoindre une étape de préchauffage du substrat, afin d'améliorer le mouillage et selon le fluide envisagé. Une étape de chauffage du substrat peut donc avoir lieu avant et/ou après l'application du fluide sur le substrat.

De façon avantageuse, le fluide fourni peut comprendre un mélange réactif polyuréthanne sans solvant comprenant : au moins un polyol ; au moins un polyisocyanate ; et au moins une polyamine dont la quantité représente typiquement 0,1 à 3 % du poids total du mélange réactif.

Du fait de leur présence simultanée, aussi bien les polyamines que les polyols vont réagir, en compétition, avec les polyisocyanates présents pour former un polyuréthanne. La réaction se fait cependant préférentiellement entre le polyisocyanate et la polyamine.

Cette réaction préférentielle entre le polyisocyanate et la polyamine permet, lors du mélange des composants, une montée rapide de la viscosité du mélange et, par suite, l'obtention d'un seuil d'écoulement. En fonction du type de polyamine utilisée, il est possible d'ajuster et de contrôler, pour un même polyisocyanate, la cinétique d'obtention du seuil d'écoulement en fonction de la quantité de polyamines présentes dans le mélange réactif. Plus précisément, la quantité de polyamine à incorporer pour l'obtention du seuil d'écoulement souhaité dépend du pourcentage de groupements amines rapporté à la somme des groupements hydroxyles apportés par les polyols. La quantité de polyamine est en général comprise entre 0,1 et 3 % en poids du mélange réactif, selon la nature de la polyamine. Lorsque le seuil d'écoulement est franchi, par exemple par un effet mécanique, la fluidité du mélange augmente, ce qui permet d'enduire un substrat tel qu'un textile tissé ou tricoté et ce, en obtenant un bon mouillage de la surface du substrat.

Par ailleurs, tous les polyisocyanates connus de l'homme de l'art peuvent a priori être utilisés.

L'utilisation d'un mélange réactif polyuréthanne sans solvant dans le procédé d'enduction selon l'invention d'un substrat tel qu'un textile tissé ou tricoté permet donc :
- l'obtention d'une fluidité suffisante pour l'enduction d'un substrat, notamment à température ambiante ;
- une remontée en cohésion rapide après cisaillement afin de ne pas traverser le substrat (par exemple la trame d'un textile);
- d'augmenter la vitesse d'une ligne de production de substrat enduit (entre 1 et 200 m/min, de préférence entre 10 et 50 m/min) en ajustant la réactivité du mélange réactif décrit ci-dessus ;
- une adaptation aisée de la formulation du mélange aux besoins ponctuels, par exemple l'incorporation d'agents anti-UV, de traceurs optiques et l'ignifugation du substrat.
- d'obtenir un coût de revient de production similaire ou inférieur aux solutions connues dans l'art antérieur.

Le mélange réactif peut en outre comprendre au moins une polyamine aromatique. Parmi les polyamines aromatiques avec lesquelles il est possible d'ajuster et de contrôler, pour un même polyisocyanate, la cinétique d'obtention d'un seuil d'écoulement, on peut citer à titre d'exemples les : 3,5-diéthyltoluène-2,4-diamine ; 3,5-diéthyltoluène-2,6-diamine ; 4,4'-méthylène-bis-2,6-di-éthylaniline ; 4,4'-méthylène-bis-(2,6-diéthyl3-chloroaniline); 4,4'-méthylène-bis-(aniline).

Le mélange réactif peut en outre comprendre un polyol choisi parmi les polyéthers polyols de masse moléculaire comprise entre 200 et 9000 et de fonctionnalité hydroxyle comprise entre 2,0 et 4,6.

A titre d'exemples de polyéthers polyols aliphatiques ou aromatiques susceptibles de convenir, on peut citer les dérivés oxyalkylés de diols (éthylène glycol, propylène glycol) ou de triols (glycérol, triméthylolpropane, hexane-1,2,6-triol) , les polymères d'oxyde d'éthylène, d'oxyde de propylène ou d'oxyde de butylène, les copolymères d'oxyde d'éthylène et d'oxyde de propylène, ainsi que les dérivés oxyalkylés de diphényles tels que les dérivés oxyéthylés et oxypropylés en position 4,4'- du diphénylméthane.

On peut également utiliser des dérivés oxypropylés de glycol et ou glycérol, les polymères d'oxyde de propylène ou de butylène et les copolymères d'oxyde d'éthylène et d'oxyde de propylène. De manière avantageuse, les polyols précités sont des mélanges de polyols de structure majoritairement amorphe.

Le mélange réactif polyuréthanne sans solvant peut en outre comprendre une partie résine avec au moins un polyol et au moins une polyamine et une partie durcisseur comprenant au moins un polyisocyanate. La polyamine (ou un mélange de polyamines) présente dans la partie résine peut présenter diverses structures et masses moléculaires compatibles et stables avec les polyols. Un avantage important de la composition ainsi obtenue est la réaction préférentielle entre polyisocyanates et polyamines lors du mélange des parties résine et durcisseur, ce qui permet une remontée rapide de la viscosité du mélange après enduction sur le substrat. En fonction du type de polyamine utilisé, il est possible d'ajuster et de contrôler, pour un même polyisocyanate, la cinétique d'obtention d'un seuil d'écoulement, comme indiqué plus haut.

Les isocyanates et polyisocyanates appartiennent au groupe constitué par les polysocyanates aromatiques, aliphatiques, cycloaliphatiques bien connus de l'homme du métier, ainsi que les mélanges de ces composés. A titre d'exemples de polyisocyanates aromatiques, on peut citer le diphénylméthane diisocyanate (MDI), notamment le diphénylméthane-4,4'-diisocyanate, le diphénylméthane-2,4'-diisocyanate, le toluène diisocyanate (TDI), notamment le toluène-2,4-diisocyanate et le toluène-2,6-diisocyanate. A titre d'exemples de polyisocyanates aliphatiques, on peut citer les adducts d'hexaméthylène diisocyanate (HMDI). A titre d'exemples de polyisocyanates cycloaliphatiques, on peut citer les adducts d'isophorone diisocyanate (IPDI).

Le mélange réactif peut en outre comprendre un dimère d'isocyanate trimérisé en isocyanurate, un allophanate, une uretdione, un biuret, un amide ou tout autre produit contenant des molécules issues des réactions caractéristiques des isocyanates (polyurethane Handbook, Günter Oertel, second edition, Hanser publishers, Munich, 1994, p. 73). Par exemple, les isocyanurates peuvent dériver de diisocyanates choisis dans le groupe constitué du diphénylméthane-4,4'-diisocyanate, du diphénylméthane-2,4'-diisocyanate, des dérivés d'hydrogénés des diisocyanates précités, du toluène-2, 4-diisocyanate, du toluène-2, 6-diisocyanate, de l'hexaméthylène diisocyanate, de l'isophoronediisocyanate et de leurs mélanges.

De préférence, le mélange réactif de l'invention comprend un isocyanate trimérisé, comprenant généralement moins de 0,2 % en poids de monomères isocyanate libres au moment du mélange.

Le mélange réactif peut en outre présenter un rapport NCO / OH compris entre 1 et 2, et de préférence compris entre 1,1 et 1,4. Le mélange réactif peut en outre comprendre, selon l'invention, des additifs, tels que des charges, des agents tackifiants, des plastifiants, des promoteurs d'adhérence tels que des composés comportant des groupes silanyles et des catalyseurs pour accélérer la réticulation. Des catalyseurs appropriés sont par exemple des catalyseurs métalliques tels que le dibutyl dilaurate d'étain, le néo-décanoate de bismuth ou les amines tertiaires tel que le 1,4-Diazabicyclo[2,2,2]octane (DABCO). L'adjonction d'additifs permet de répondre facilement à des besoins ponctuels.

Le mélange réactif polyuréthanne peut ainsi présenter une forme bi-composante sans solvant avec :
- une partie résine comprenant au moins un polyol, une polyamine et, éventuellement, un catalyseur, un colorant, des pigments, une charge, un agent mouillant, un promoteur d'adhérence, un stabilisant UV, un azurant optique, un ignifugeant et un antioxydant ; et
- une partie durcisseur comprenant au moins un polyisocyanate et, éventuellement, une charge et/ou divers additifs connus de l'homme de l'art ; ces deux parties étant mélangées de préférence juste avant l'application du mélange sur le substrat.

Le mélange réactif décrit ci-dessus permet de contrôler la viscosité, la montée en cohésion et la cinétique d'obtention d'un seuil d'écoulement du mélange. Il est alors possible d'obtenir un mélange d'enduction suffisamment fluide pour mouiller le substrat au moment de son application (en surmontant le seuil d'écoulement) et, également, d'obtenir une rapide remontée en cohésion après l'enduction, pour ne pas traverser le substrat. En particulier, il est possible d'arriver à un mouillage correct du substrat même lorsque celui-ci présente de forts reliefs comme dans le cas des textiles gaufrés. L'enduction d'un substrat par le mélange réactif n'est par ailleurs pas nuisible aux propriétés d'un substrat et, notamment, pas nuisible à ses propriétés d'agrippement lorsque le textile est un textile auto-agrippant.

Ainsi, le procédé selon l'invention améliore notablement l'enduction d'envers de substrats et peut être mise en oeuvre avec des substrats présentant une grande variété de texture. Parmi les substrats susceptibles de convenir, on peut citer par exemple les substrats à fils brosses, les papiers antiadhésifs, les films plastiques, en particulier de polyester, polyamide, polypropylène et polyéthylène, les films métalliques ou les films plastiques comprenant des fils métallisés, les films avec un placage bois, les tissus à fibres naturelles (par exemple à fibres de coton), les tissus antistatiques, la matière textile artificielle à base de cellulose (par exemple la rayonne).

### EXEMPLES

On donne, dans ce qui suit des exemples de composition chimique de mélange réactif polyuréthanne sans solvant susceptible d'être fourni à l'étape (i) du procédé selon l'invention.

### EXEMPLE 1

Le mélange réactif polyuréthanne comprend une partie (A) résine ainsi qu'une partie (B) durcisseur.

### PARTIE A (résine)

La partie résine comprend les constituants suivants (suivis de leur pourcentage en poids, sur un total de 100% de partie résine aux résidus près) :
■ des polyéthers-polyols aliphatiques (30,58%) de faibles masses moléculaires, c'est-à-dire comprises en moyenne entre 400 et 450 et dont la fonctionnalité est de 3 ;
■ des polyéthers-polyols aliphatiques (45,78%) de masses moléculaires d'environ 2800-3300 et dont la fonctionnalité est de 3 ;
■ un ou des agent(s) réticulant(s) à base de diamine aromatique (1,53%) ;
■ un additif mouillant et dispersant à base de solution de sel d'acide carboxylique de polyamine amide (0,46%) ;
■ un ou des agent(s) antimousse(s) à base d'une émulsion non aqueuse d'un polysiloxane (0,23%)
■ un ou des agent(s) azurant(s) optique(s) (0,03%)
■ un ou des agent(s) antioxydant(s) phénolique(s) (0,1%)
■ un ou des agent(s) stabilisant(s) à la lumière, à base de benzotriazole (0,19%)
■ un tamis moléculaire de type zéolite synthétique (3,06%)
■ une charge de trihydrioxyde d'aluminium (17,96%), de granulométrie moyenne de 9 micromètres.

Le trihydroxyde d'aluminium est dans cet exemple utilisé comme charge afin d'améliorer les propriétés de tenue au feu.

Les caractéristiques rhéologiques de la partie résine sont les suivantes :
■ une viscosité, mesurée à l'aide d'un viscosimètre Brookfield (modèle RVT, aiguille numéro 2, à 20t/min) à 23°C comprise entre 700 et 1000 mPas.
■ Une densité, mesurée par pycnomètrie standard à 23°C, comprise entre 1,16 et 1,18 Le mélange est réalisé sous azote ou sous vide et bénéficie d'une agitation soutenue afin que l'empâtage des solides puisse se faire correctement selon les règles de l'art.

La viscosité et la densité du mélange sont deux critères importants de l'appréciation de la conformité de la résine selon cet exemple.

### PARTIE B durcisseur

La partie durcisseur comprend un diphenyl méthane diisocyanate comprenant des isomères et des oligomères de haute fonctionnalité. La teneur moyenne en NCO est de 31,2 et la densité du durcisseur est de 1,23.

Le taux de NCO est le critère important d'appréciation de la conformité de la partie durcisseur selon cet exemple.

Le rapport d'emploi résine / durcisseur en poids est de 100 / 40,8.

Naturellement, d'autres types et taux correspondants de charges, d'agents thixotropant, de polyols, et de catalyseurs peuvent être utilisés afin d'ajuster la réactivité du mélange réactif polyuréthanne sans solvant.

### EXEMPLE 2

A titre d'exemple de l'assertion précédente, il est possible de modifier l'exemple 1 en utilisant une charge de trihydrioxyde d'aluminium (17,96%) de granulométrie moyenne de 2 micromètres au lieu de 9 micromètres. Ceci a pour conséquence d'augmenter la viscosité Brookfield de la partie résine, c'est-à-dire typiquement de 60 - 70%. En outre, le produit obtenu décante plus lentement et est par conséquent plus stable lors de son stockage.

### EXEMPLE 3

Il est en outre possible d'obtenir une enduction finale moins ramifiée, notamment en introduisant un polyol difonctionnel. Le mélange réactif polyuréthanne comprend alors une partie (A) résine ainsi qu'une partie (B) durcisseur dont les caractéristiques sont les suivantes.

### PARTIE A (résine)

La partie résine comprend les constituants suivants (suivis de leur pourcentage en poids, sur un total de 100% de partie résine aux résidus près) :
- des polyéthers-polyols aliphatiques (20,00%) de faibles masses moléculaires, c'est-à-dire comprises en moyenne entre 400 et 450 et dont la fonctionnalité est de 3 ;
- des polyéthers-polyols aliphatiques (15,50%) de faibles masses moléculaires, c'est-à-dire comprises en moyenne entre 380 et 420 et dont la fonctionnalité est de 2 ;
- des polyéthers-polyols aliphatiques (41,00%) de masses moléculaires d'environ 2800-3300 et dont la fonctionnalité est de 3 ;
- un ou des agent(s) réticulant(s) à base de diamine aromatique (1,53%) ;
- un additif mouillant et dispersant à base de solution de sel d'acide carboxilique de polyamine amide (0,46%) ;
- un ou des agent(s) antimousse(s) à base d'une émulsion non aqueuse d'un polysiloxane (0,23%)
- un ou des agent(s) azurant(s) optique(s) (0,03%)
- un ou des agent(s) antioxydant(s) phénolique(s) (0,1%)
- un ou des agent (s) stabilisant (s) à la lumière, à base de benzotriazole (0,19%)
- un tamis moléculaire de type zéolite synthétique (3,06%)
- une charge de trihydrioxyde d'aluminium (17,96%), de granulométrie moyenne de 2 ou 9 micromètres.

Les caractéristiques rhéologiques de la partie résine sont cependant proches des exemples précédents.

### PARTIE B durcisseur : identique à l'exemple 1.

Le rapport d'emploi résine / durcisseur en poids reste de 100 / 40,8.

L'invention n'est pas limitée aux modes de réalisation décrits mais est susceptible de nombreuses variations aisément accessibles à l'homme du métier.

## Revendications

1. Procédé d'enduction d'un substrat par un fluide, comprenant les étapes de :
(i) fourniture d'un substrat et d'un fluide à seuil d'écoulement; et
(ii) cisaillement du fluide et application du fluide sur le substrat;
dans lequel le fluide fourni comprend un mélange réactif polyuréthanne sans solvant ;
et dans lequel dans lequel le mélange réactif polyuréthanne fourni comprend :
- au moins un polyol ;
- au moins un polyisocyanate ; et
- au moins une polyamine dont la quantité représente 0,1 à 3 % du poids total du mélange réactif.
et dans lequel le mélange réactif polyuréthanne sans solvant comprend une partie résine avec au moins un polyol et au moins une polyamine et une partie durcisseur comprenant au moins un polyisocyanate.

2. Procédé d'enduction d'un substrat par un fluide selon la revendication 1, dans lequel le mélange réactif fourni comprend des caractéristiques de :
- viscosité Brookfield à 23°C comprise entre 100 et 200000 mPas, de préférence entre 200 et 4000 mPas ;
- seuil d'écoulement compris entre 1 et 5000 Pa, de préférence entre 10 et 500 Pa ; et
- délai d'obtention du seuil d'écoulement compris entre 1 et 20 secondes et de préférence entre 2 et 10 secondes.

3. Procédé d'enduction selon l'une quelconque des revendications précédentes, dans lequel la viscosité du fluide diminue lorsqu'une contrainte de cisaillement est appliquée sur le fluide.

4. Procédé d'enduction selon l'une quelconque des revendications précédentes, dans lequel le cisaillement de l'étape (ii) est obtenu par la mise en mouvement relatif du substrat par rapport au fluide.

5. Procédé d'enduction selon l'une quelconque des revendications précédentes, comprenant en outre une étape :
(iii) d'extension du substrat au moins partiellement concomitante avec l'étape de cisaillement du fluide;

6. Procédé d'enduction selon la revendication précédente, dans lequel le substrat fourni à l'étape (i) est un substrat maillé et dans lequel l'étape (iii) est une étape d'extension des mailles du substrat.

7. Procédé d'enduction selon l'une quelconque des revendications précédentes, comprenant en outre une étape :
(iv) de chauffage du substrat.

8. Procédé d'enduction selon l'une quelconque des revendications précédentes, dans lequel le mélange réactif fourni comprend au moins une polyamine aromatique.

9. Procédé d'enduction selon l'une quelconque des revendications précédentes, dans lequel le mélange réactif fourni comprend au moins un polyether polyol, de masse moléculaire comprise entre 200 et 9000 et de fonctionnalité hydroxyle comprise entre 2,0 et 4,6.

10. Procédé d'enduction selon l'une quelconque des revendications précédentes, dans lequel le mélange réactif fourni présente un rapport NCO / OH compris entre 1 et 2, et de préférence compris entre 1,1 et 1, 4.

11. Procédé d'enduction selon l'une quelconque des revendications précédentes, dans lequel le mélange réactif fourni comprend un catalyseur.

12. Substrat enduit comprenant un textile tissé ou tricoté, susceptible d'être obtenu par le procédé d'enduction d'un substrat de l'une quelconque des revendications précédentes.

13. Substrat enduit selon la revendication précédente, dans lequel le substrat comprend un textile auto-agrippant.

## Patentansprüche

1. Verfahren zum Beschichten einer Unterlage durch ein Fluid, das die folgenden Schritte aufweist:
(i) Lieferung einer Unterlage und eines Fluids mit Fließpunkt, und
(ii) Scheren des Fluids und Auftragen des Fluids auf die Unterlage, bei dem das gelieferte Fluid ein reaktives Polyurethangemisch ohne Lösemittel aufweist,
und wobei das reaktive Polyurethangemisch aufweist:
- mindestens ein Polyol,
- mindestens ein Polyisocyanat,
- mindestens ein Polyamin, dessen Menge 0,1 bis 3 % des Gesamtgewichts des reaktiven Gemischs darstellt,
und bei dem das reaktive Polyurethangemisch ohne Lösemittel einen Harzteil mit mindestens einem Polyol und mindestens einem Polyamin und einem Teil Härtmittel, der wenigstens ein Polyisocyanat enthält, aufweist.

2. Verfahren zum Beschichten einer Unterlage durch ein Fluid nach Anspruch 1, bei dem das gelieferte reaktive Gemisch folgende Merkmale aufweist:
- Brookfield-Viskosität bei 23 °C zwischen 100 und 200000 mPa, vorzugsweise zwischen 200 und 4000 mPa,
- Fließpunkt zwischen 1 und 5000 Pa, vorzugsweise zwischen 10 und 500 Pa, und
- Frist zum Erzielen des Fließpunkts zwischen 1 und 20 Sekunden und vorzugsweise zwischen 2 und 10 Sekunden.

3. Verfahren zum Beschichten nach einem der vorhergehenden Ansprüche, bei dem die Viskosität des Fluids abnimmt, wenn dem Fluid eine Scherbelastung auferlegt wird.

4. Verfahren zum Beschichten nach einem der vorhergehenden Ansprüche, bei dem das Scheren des Schritts (ii) durch relatives Inbewegungsetzen der Unterlage in Bezug zu dem Fluid erzielt wird.

5. Verfahren zum Beschichten nach einem der vorhergehenden Ansprüche, das ferner einen Schritt aufweist:
(iii) des Streckens der Unterlage wenigstens teilweise gleichzeitig mit dem Scherschritt des Fluids.

6. Verfahren zum Beschichten nach dem vorhergehenden Anspruch, bei dem die im Schritt (i) gelieferte Unterlage eine Maschenunterlage ist, und bei dem der Schritt (iii) ein Schritt des Streckens der Maschen der Unterlage ist.

7. Verfahren zum Beschichten nach einem der vorhergehenden Ansprüche, das ferner einen Schritt aufweist:
(iv) des Erhitzens der Unterlage.

8. Verfahren zum Beschichten nach einem der vorhergehenden Ansprüche, bei dem das gelieferte reaktive Gemisch wenigstens ein aromatisches Polyamin aufweist.

9. Verfahren zum Beschichten nach einem der vorhergehenden Ansprüche, bei dem das gelieferte reaktive Gemisch wenigstens einen Polyolpolyether mit einem Molekulargewicht zwischen 200 und 9000 und HydroxylFunktionalität zwischen 2,0 und 4,6 aufweist.

10. Verfahren zum Beschichten nach einem der vorhergehenden Ansprüche, bei dem das gelieferte reaktive Gemisch ein Verhältnis NCO / OH zwischen 1 und 2 aufweist und vorzugsweise zwischen 1,1 und 1,4.

11. Verfahren zum Beschichten nach einem der vorhergehenden Ansprüche, bei dem das gelieferte reaktive Gemisch einen Katalysator aufweist.

12. Beschichtete Unterlage, die ein gewebtes oder gestricktes Textil aufweist, das durch das Beschichtungsverfahren einer Unterlage eines der vorhergehenden Ansprüche erzielt werden kann.

13. Beschichtete Unterlage nach dem vorhergehenden Anspruch, bei der die Unterlage ein Kletttextil aufweist.

## Claims

1. Process for coating a substrate with a fluid, comprising the steps of:
(i) supplying a substrate and a yield point fluid; and
(ii) shearing the fluid and applying the fluid to the substrate;
wherein the fluid supplied comprises a solvent-free reactive polyurethane mixture, and wherein the reactive polyurethane mixture supplied comprises:
- at least one polyol;
- at least one polyisocyanate; and.
- at least one polyamine of which the quantity represents 0.1 to 3 % of the total weight of the reactive mixture,
and wherein the solvent-free reactive polyurethane mixture comprises a resin portion having at least one polyol and at least one polyamine, and a hardener portion comprising at least one polyisocyanate.

2. Process for coating a substrate with a fluid according to claim 1, wherein the reactive mixture supplied comprises features of:
- Brookfield viscosity at 23 °C of between 100 and 200,000 mPa.s, preferably between 200 and 4,000 mPa.s;
- a yield point of between 1 and 5,000 Pa, preferably between 10 and 500 Pa; and
- a yield point lag time of between 1 and 20 seconds, preferably between 2 and 10 seconds.

3. Process for coating according to any of the preceding claims, wherein the viscosity of the fluid decreases when a shear stress is applied to the fluid.

4. Process for coating according to any of the preceding claims, wherein the shearing in step (ii) is obtained by setting the substrate in relative motion in relation to the fluid.

5. Process for coating according to any of the preceding claims, further comprising a step of:
(iii) stretching the substrate concomitantly, at least in part, with the fluid-shearing step.

6. Process for coating according to the preceding claim, wherein the substrate supplied in step (i) is a meshed substrate and wherein the step (iii) is a step of stretching the meshes of the substrate.

7. Process for coating according to any of the preceding claims, further comprising a step of:
(iv) heating the substrate.

8. Process for coating according to any of the preceding claims, wherein the reactive mixture supplied comprises at least one aromatic polyamine.

9. Process for coating according to any of the preceding claims, wherein the reactive mixture supplied comprises at least one polyether polyol of a molecular weight of between 200 and 9,000 and of hydroxyl functionality of between 2.0 and 4.6.

10. Process for coating according to any of the preceding claims, wherein the reactive mixture supplied has an NCO/OH ratio of between 1 and 2, and preferably of between 1.1 and 1.4.

11. Process for coating according to any of the preceding claims, wherein the reactive mixture supplied comprises a catalyst.

12. Coated substrate comprising a woven or knitted textile, capable of being obtained by means of the substrate-coating method of any of the preceding claims.

13. Coated substrate according to the preceding claim, wherein the substrate comprises a self-clinging textile.
